# EUROPÄISCHE PATENTANMELDUNG

(11) **EP 1 067 068 A1**
(43) Veröffentlichungstag der Anmeldung: **10.01.2001**
(21) Anmeldenummer: 00113128.3
(22) Anmeldetag: 29.06.2000
(51) Int. Cl.: B65G 47/57

(54) **Verfahren und Vorrichtung zum Transport von Gepäckstücken in Flughafenanlagen**

(30) Priorität: 08.07.1999 DE 19931756
(71) Anmelder: ABB PATENT GmbH, 68309 Mannheim (DE)
(72) Erfinder: Koini, Martin, 57636 Sörth (AT); Kärcher, Thomas M., Dipl.-Ing., 69469 Weinheim (DE)
(74) Vertreter: Miller, Toivo

(57) **Zusammenfassung**

Die Erfindung betrifft ein Verfahren und eine Vorrichtung zum Transport von Gepäckstücken (12) in Flughafenanlagen mit einer Förderanlage, zum Beispiel mit einem horizontal und/oder schräg geführten Transportband, mittels welcher Förderanlage übergebene Gepäckstücke (12) horizontal und/oder schräg von wenigstens einer Aufgabestelle (14) zu wenigstens einer Ausgabestelle (16) transportiert werden, an welcher die Gepäckstücke (12) entnommen werden, wobei zwischen der wenigstens einen Aufgabestelle (14) und der wenigstens einen Ausgabestelle (16) die Gepäckstücke (12) zumindest örtlich vertikal gefördert werden und deren Transportweg elektronisch überwacht wird.

## Beschreibung

Die Erfindung betrifft ein Verfahren zum Transport von Gepäckstücken in Flughafenanlagen mit einer Förderanlage, zum Beispiel mit einem horizontal und/oder schräg geführten Transportband, mittels welcher Förderanlage übergebene Gepäckstücke horizontal und/oder schräg von wenigstens einer Aufgabestelle zu wenigstens einer Ausgabestelle transportiert werden, an welcher die Gepäckstücke entnommen werden.

In modernen Flughäfen befindet sich der sogenannte Check-In-Bereich für die Fluggäste, an welchem deren Gepäckstücke entgegengenommen werden, üblicherweise auf einem anderen Höhenniveau als das Flugfeld, von wo aus die Beladung der Flugzeuge erfolgt.

Zur Überwindung dieser Höhendifferenz werden bislang vorzugsweise Schrägförderer eingesetzt, welche hierzu unter einem Winkel von max. 18° angestellt sind. Diese Gestaltung führt zu einem hohen Raumbedarf, um den Höhenunterschied zu überwinden, und erfordert häufig eine gewisse Anzahl von Förderern.

Ein größerer Neigungswinkel als 18°, um den Raumbedarf einzuschränken, ist andererseits auch nicht möglich, da dann der sichere Transport der darauf abgelegten Gepäckstücke nicht gewährleistet ist.

Ausgehend von diesem Stand der Technik ist es Aufgabe der Erfindung, ein Verfahren der eingangs genannten Art anzugeben, mittels welchem der für den flughafeninternen Transport der Gepäckstücke verbundene Raumbedarf verringert werden kann. Eine weitere Aufgabe ist es, eine geeignete Vorrichtung zur Durchführung des erfindungsgemäßen Verfahrens anzugeben.

Diese Aufgabe wird erfindungsgemäß durch die kennzeichnenden Merkmale des Patentanspruchs 1 gelöst. Dementsprechend ist vorgesehen, daß zur raumsparenden Überwindung von Höhenunterschieden zwischen der wenigstens einen Aufgabestelle und der wenigstens einen Ausgabestelle die Gepäckstücke zumindest örtlich vertikal gefördert werden und daß deren Transportweg elektronisch überwacht wird.

Gemäß einer bevorzugten Ausgestaltung der Erfindung ist vorgesehen, daß die zu transportierenden Gepäckstücke jeweils in trogartigen Vorrichtungen aufgenommen werden, welche auf Transportplattformen abgestellt und nach erfolgtem Transport wieder abgenommen werden, wobei die Transportplattformen ständig in vertikaler Richtung bewegt werden.

Die Entkoppelung der Aufnahmevorrichtungen für die Gepäckstücke und der eigentlichen Fördervorrichtung hat den großen Vorteil, daß die Fördervorrichtung ständig betriebsbereit ist beziehungsweise permanent in Betrieb ist, während die zu transportierenden Gepäckstücke unabhängig von ihrer jeweiligen Form aufgegeben und entnommen werden können.

In vorteilhafter Weiterbildung des erfindungsgemäßen Verfahrens kann vorgesehen sein, daß die trogartigen, zur Aufnahme von Gepäckstücken vorgesehenen Vorrichtungen jeweils mit Kodierungen versehen werden, die maschinell erfaßt werden, daß die Kodierung den in diese Aufnahmevorrichtungen eingebrachten Gepäckstücke zugeordnet werden und daß durch elektronische Auswertung der erfaßten Kodierungen unter Einbeziehung der dieser Kodierung jeweils zugeordneten Gepäckstücke deren örtlicher Aufenthaltsort ermittelt wird. Hierdurch ist eine durchgängige Transportkontrolle gewährleistet, wobei überdies mittels zugeordneter DV-Systeme der Verbleib von Gepäckstücken im Falle deren Abhandenkommens einfach ermittelt werden kann.

Eine weitere Verbesserung des erfindungsgemäßen Verfahrens ist dadurch gekennzeichnet, daß die Zufuhr von leeren trogartigen Vorrichtungen auf eine Transportplattform jeweils abhängig davon erfolgt, ob die hierfür vorgesehene Transportplattform frei ist. Hierdurch ist sichergestellt, daß der Betrieb störungsfrei abläuft und nicht durch fehlgeleitete, blockierende Gepäckstücke unterbrochen wird.

Eine zur Durchführung des zuvor beschriebenen erfindungsgemäßen Verfahrens bekannte Vorrichtung ist in einer Flughafenanlage mit Betriebsebenen auf unterschiedlichem Niveau installiert und besitzt wenigstens eine Fördereinrichtung für Fluggepäck, zum Beispiel mit einem horizontal und/oder schräg geführten Transportband oder -gurt. Diese bekannte Förderanlage transportiert auf dem Fördergurt abgelegte Gepäckstücke horizontal und/oder schräg von wenigstens einer Aufgabestelle zu wenigstens einer Ausgabestelle zur Entnahme der Gepäckstücke.

Wie bereits angesprochen, führt die bekannte Fördereinrichtung zu einem erheblichen Raumbedarf sowie zu einer Mehrzahl von Einzelförderern für das Gepäck, um dieses bei der vorhandenen Höhendifferenz möglichst störungsfrei zu transportieren.

Ausgehend von diesem Stand der Technik ist es Aufgabe der Erfindung, die vorstehend beschriebene Fördereinrichtung gemäß dem Stand der Technik so zu gestalten, daß der Raumbedarf für die Fördereinrichtung vermindert ist und das erfindungsgemäße Verfahren durchführbar ist.

Diese Aufgabe wird erfindungsgemäß durch die kennzeichnenden Merkmale des Patentanspruchs 5 gelöst. Dementsprechend ist eine vertikale Fördervorrichtung für Gepäckstücke vorgesehen, welche die Gepäckstücke übernimmt und von einer ersten Betriebsebene zu einer zweiten Betriebsebene transportiert. Ferner ist eine elektronische Überwachungseinrichtung vorgesehen, welche die Aufgabe, den Transport und die Ausgabe der Gepäckstücke überwacht.

Die vertikale Fördervorrichtung ist vorzugsweise ähnlich einem Paternoster gestaltet, das heißt, die Aufnahmevorrichtungen für die Gepäckstücke laufen permanent um. Die ebenfalls vorgesehene elektronische Überwachungsvorrichtung ist vorzugsweise ein EDV-gestütztes Videokamera-System, welches den Transportweg beziehungsweise zumindest die Zu- und Abführung der Gepäckstücke visuell erfaßt und so jedwelche Störungen im Betriebsablauf automatisch erkennt und anzeigt. Demgemäß besteht die zumindest eine optische Einrichtung zur Überwachung des vertikalen Transportweges vorzugsweise aus Videokameras, die jeweils an den Aufgabe- und Ausgabestellen plaziert sind.

In weiterer Verbesserung der Erfindung sind die Gondeln oder Wannen mit einer Kodierung versehen, die von einem Lesegerät erfaßbar und in einer Auswerteeinheit auswertbar ist.

Entsprechend einer vorteilhaften Ausgestaltung der Erfindung transportiert die vertikale Fördervorrichtung Gepäckstücke unmittelbar, das heißt ohne zusätzliche Schrägförderer, von einem Check-In-Bereich auf der ersten Betriebsebene zu einer Gepäckhalle auf der zweiten Betriebsebene, deren Niveau räumlich wenigstens 10 m unterhalb des Niveaus des Check-In-Bereiches liegt.

Gemäß einer bevorzugten Weiterbildung der erfindungsgemäßen Vorrichtung ist die vertikale Fördervorrichtung von wenigstens einer vertikal geführten Transportlinie mit daran angeordneten Plattformen gebildet, welche die zu transportierenden Gepäckstücke jeweils in trogartigen Vorrichtungen aufnehmen. Dabei erweist es sich als günstig, daß die trogartigen Vorrichtungen von Gondeln oder Wannen gebildet sind, welche auf den Plattformen schwerkraftabhängig gehalten sind.

Dabei ist vorteilhafterweise die Transportlinie von einer Förderkette oder von einem Förderseil gebildet, woran die Transportplattformen zur Aufnahme der Wannen oder Gondeln in festem Abstand angeordnet sind.

Diese und weitere vorteilhafte Ausgestaltungen und Verbesserungen der Erfindung sind Gegenstand der Unteransprüche.

Anhand eines in der beigefügten Zeichnung schematisch dargestellten Ausführungsbeispieles sollen die Erfindung, vorteilhafte Ausgestaltungen und Verbesserungen sowie besondere Vorteile der Erfindung erläutert und beschrieben werden.

Es zeigen:
- Fig. 1: eine schematisierte Seitenansicht einer Vertikal-Fördervorrichtung gemäß der Erfindung mit einer oberen Aufgabestelle und einer unteren Ausgabestelle;
- Fig. 2: eine Draufsicht auf die untere Ausgabestelle der Anordnung gemäß Fig. 1
und
- Fig. 3: eine Draufsicht auf die obere Aufgabestelle der Anordnung gemäß Fig. 1.

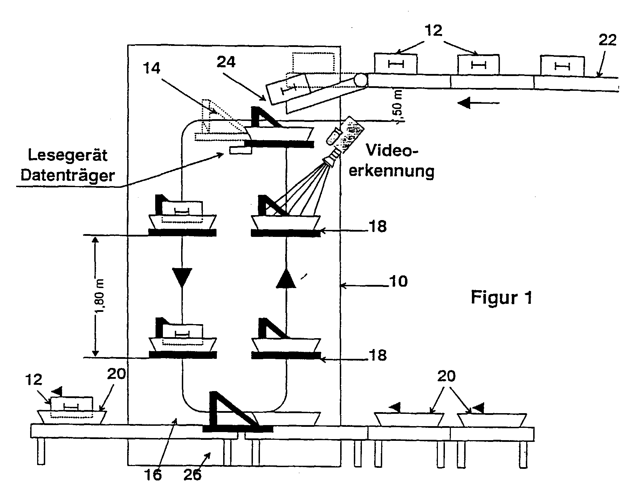

In Fig. 1 ist in schematischer Prinzip-Darstellung eine Fördervorrichtung 10 gemäß der Erfindung in Seitenansicht gezeigt, die auf einem Flughafen angeordnet ist und mittels welcher Gepäckstücke 12 von einer oberen Aufgabestelle 14 zu einer unteren Ausgabestelle 16 gefördert werden.

Die Fördervorrichtung 10 ist dabei als Vertikalförderer ausgebildet, der ähnlich einem Paternoster gestaltet ist und Transportplattformen 18 aufweist, die in einem bestimmten Abstand zueinander, im gezeigten Ausführungsbeispiel 1,8 m, angeordnet sind.

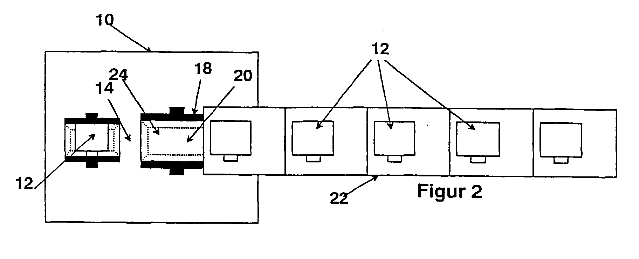

Die Transportplattformen 18 dienen als Auflage für Transportwannen 20, welche mobil sind und jeweils ein Gepäckstück aufnehmen. Hierbei wird das betreffende Gepäckstück 12 an dem hier nicht dargestellten Check-In-Bereich auf ein Transportband 22 gelegt und auf der hier nur angedeuteten Bandförderanlage 22 (Fig. 2) zu der Aufgabestation 14 des Vertikalförderers 10 gefördert. Hier ist eine entsprechende Beladeeinrichtung 24 vorgesehen, welche für die selbsttätige Gepäckverladung auf den mit Transportwannen 20 bestückten Vertikalförderers 10 sorgt.

Zur Fernüberwachung des Beladevorgangs sowie zur Erkennung unzulässiger Manipulationen an der Anlage durch Betriebsfremde dient eine Videokamera, welche innerhalb des Transportschachtes 11 für den Vertikalförderer 10 angeordnet ist, dessen Breite ca. 3 m beträgt.

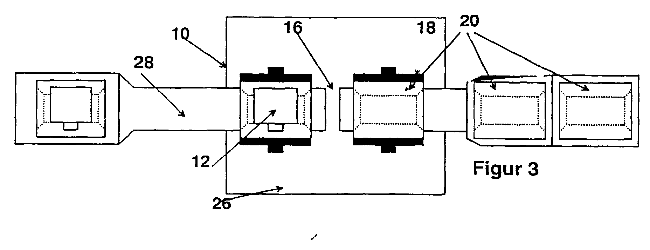

An der unterhalb gelegenen Ausgabestation 16 befindet sich eine weitere Ladevorrichtung 26 (Fig. 3), welche einerseits die mit Gepäckstücken 12 beladenen Transportwannen 20 aus dem Vertikalförderer 10 entnimmt und auf ein weiteres Transportband 28 leitet, und andererseits leere Transportwannen 20 dem Vertikalförderer 10 zuführt.

Die Ladevorrichtungen sind dabei so gestaltet, daß die Gepäckstücke 12 nach Anlieferung an der oberen Aufgabestation 14 jeweils einzeln in die Transportwannen 20 gekippt werden. Der Vertikalförderer transportiert die gefüllten Wannen nach unten, gibt sie dort an den Horizontalförderer ab und nimmt im zweiten Schritt eine ebenfalls auf einem Förderband zugeführte Leerwanne 20 mit nach oben.

In den Figuren 2 und 3 sind ausschnittweise Draufsichten auf die oben befindliche Aufgabestation 14 und auf die unterhalb angeordnete Ausgabestation 16 gezeigt, welche verdeutlichen, daß aus der Anwendung des erfindungsgemäßen Verfahrens sowie mit der hierfür vorgesehenen Vorrichtung eine deutliche Verbesserung des betrieblichen Ablaufes bei gleichzeitig vermindertem Raumbedarf resultiert.

Der Vertikalförderer wird in der Höhe so dimensioniert, daß die Oberkante der die Gepäckstücke 12 zuführenden Förderanlage ca. 0,6 m oberhalb des Umkehrpunkts des Vertikalförderer liegt, während die Oberkante der die Transportwannen zuführenden Fördereinrichtung etwa 0,6 m oberhalb des Bodens liegt.

Der Vertikalförderer 10 besteht aus einer umlaufenden Kette, an der als Transportplattformen ausgebildete Gondeln 18 aufgehängt sind. Diese bewegen sich mit konstanter Geschwindigkeit im Kreis. Im oberen Totpunkt des Vertikalförderer 10 werden Gepäckstücke 12 in die Transportwannen 20 verladen.

Die Gondeln 18 des Vertikalförderer 10 sind so beschaffen, daß zwischen den äußeren Führungen die jeweilige Transportwanne 20 von unten frei zugänglich ist, so daß nach Absenken der Gondelführung unterhalb der Ausgabestation 26 eine Ausziehvorrichtung die Transportwanne 20 ergreift und aus dem Vertikalförderer 10 heraus transportiert.

Auf einem Niveau von + 0,6 m über dem Boden des Vertikalförderer 10 befindet sich die Fördertechnik für die Transportwannen. Hierbei werden volle Transportwannen 20, die von oben gefördert werden, dem Vertikalförderer 10 entnommen sowie Leerwannen dem Vertikalförderer 10 zum Transport von Gepäckstücken nach oben zugeführt.

Bei Erreichen des unteren Totpunkts werden volle Transportwannen 20 einerseits aus dem Vertikalförderer 10 herausgeleitet und leere Transportwannen 20 zugeführt. Dies muß schnell genug geschehen, um eine Kollision mit der nachfolgenden Gondel zu vermeiden. Die Führung der Gondel 18 taucht im unteren Totpunkt unterhalb der Gurtoberkante des die Transportwannen 20 zuführenden Transportbandes. Die Transportwanne 20 gelangt so auf einfache Weise auf die Transportplattform 18 und wird abtransportiert.

Damit der Vertikalförderer 10 weiterlaufen kann, muß gewährleistet sein, daß außerhalb des Vertikalförderers 10 Stauplatz zur Verfügung steht. Im Fall von Rückstau läuft der Förderer mit der Gondelrichtung mit, so daß die volle Wanne eine Ehrenrunde absolviert. In diesem Fall darf keine Leerwanne auf der gegenüberliegenden Seite in den Vertikalförderer 10 hineingefördert werden.

Nachdem die volle Wanne von der Gondel auf das untere Förderband abgegeben wurde, läuft die Gondel immer noch unterhalb der Oberkante Gurt in ihrem unteren Totpunkt horizontal weiter. Bevor die Gondel 18 wieder ihre Fahrt nach oben antritt, wird eine Leerwanne auf der Plattform 18 mittels Lichtschranken erfaßt und exakt positioniert.

Sobald die Gondel 18 ihren unteren Totpunkt durchlaufen hat, greifen ihre Führungen die positionierte Leerwanne 20, und die Gondel 18 nimmt die Transportwanne 20 mit nach oben.

Eine Leerwanne 20 darf nur dann in Position gebracht werden, wenn mittels eines Pufferplatzes außerhalb des Vertikalförderer 10 sichergestellt ist, daß die ankommende Vollwanne auch abtransportiert werden kann.

Gepäckstücke werden auf einer Ebene ca. +600 mm oberhalb des oberen Umlenkpunktes des Vertikalförderer 10 mittels Gurtfördertechnik angefördert. Die Gepäckstücke 12 werden von den Check-in-Bereichen auf Sammelbändern zugeführt. Vor dem Vertikalförderer 10 werden kurze Taktbänder zu Pufferzwecken angeordnet.

Die obere Beladestation 14 besteht aus einem klappbaren Gurtband, das zur Beladung nach unten abgesenkt wird. Hierdurch reduziert sich die Fallhöhe und durch die Schräglage des Bandes erreicht das Gepäckstück einen tieferen, geführten Fallpunkt. Im Falle einer zirkulierenden Vollwanne bleibt das Gepäckband in der oberen Lage.

Auf dem letzten Band der das Gepäck zuführenden Fördertechnik wird dieses von einer Steuerung zum Beladen positioniert. Dies geschieht mit Hilfe einer Lichtschranke ca. 200 mm vor Ende des Förderers.

Wird eine Wanne von der als Leerwannenüberwachung vorgesehenen Videoüberwachung als leer anerkannt, wird das Ladeband abgesenkt und in Position gebracht. Nachdem die leere Wanne mit der Gondel eine bestimmte Position vor diesem Förderer erreicht hat, wird dieses Band gestartet und der Koffer synchron mit der Gondelbewegung eingetaktet. Die Zielposition sollte die Vorderkante der Wanne sein.

Eine Spaltüberwachung dient dazu, Störungen anzuzeigen, wenn sich der Koffer zwischen Gondel und Förderer verhakt. Vorteilhafterweise sind die Transportwannen 20 mit Datenträgern oder Kodierungen versehen, welche zur Gepäckstückinformation dienen. Beim Beladen der Wanne wird auf den Datenträger der Wanne die Gepäckstückinformation geschrieben.

Unterhalb des Ladebandes sitzt eine Kamera, die an ein Videoerfassungssystem angeschlossen ist. Durch eine Lichtschranke getriggert, erfaßt sie jeweils ein Bild derjenigen Transportwanne 20, die als nächstes zur Beladung ansteht.

Wird die Transportwanne 20 als leer erkannt, kann das Ladeband nach unten schwenken und die Beladung des Gepäckstückes 12 wie zuvor beschrieben ablaufen. Ist die Transportwanne 20 ausnahmsweise nicht leer, so bleibt das Ladeband oben, um genügend Freiraum für die volle Wanne auf ihrem Umlauf zu gewährleisten. Das Gepäckstück wird in einem solchen Fall bis zur nächsten leeren Wanne zurückgehalten.

Eine solche Leerwannenerkennung ist nicht zwingend erforderlich, wenn gewährleistet ist, daß nur leere Wannen dem Vertikalförderer 10 zugeführt werden. In diesem Fall kann die Information "leer" / "voll" vor dem Vertikalförderer 10 auf den Datenträger geschrieben werden und dann vor der Beladung ausgelesen werden.

Vorstehend wurde die Funktionalität des Vertikaltransports von oben nach unten beschrieben. Prinzipiell ist auch die umgekehrte Richtung denkbar, das heißt von unten nach oben. Dies könnte zum Beispiel für Ankunftsgepäck interessant werden, welches von der Gepäckhalle zum Ankunftsbereich transportiert werden muß.

Vorstehend wurde das erfindungsgemäße Verfahren anhand einer zu seiner Durchführung konzipierten Vorrichtung erläutert. Um den Vorteil der Erfindung zu verdeutlichen soll nachfolgend das seitherige Transportprinzip beim flughafeninternen Gepäcktransport erläutert werden. Aus Gründen der Bequemlichkeit befinden sich bei modernen Flughäfen die Abfertigung ( 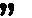 Check-In-Bereich") und die Abflugsteige für abreisende Fluggäste auf einer Ebene die auf etwa gleicher Höhe liegt wie die Zugangsöffnungen der zur Beförderung der Fluggäste und deren Gepäcks vorgesehenen Flugzeuge. Dementsprechend wird das zu transportierende Fluggepäck auf der Abfertigungsebene angenommen, die im allgemeinen über dem Bodenniveau liegt, und muß anschließend nach unten zur Sortier- und Ladeebene gefördert werden, wo es dann zum betreffenden Flugzeug gebracht wird. Dementsprechend erfolgt die Verladung des Fluggepäcks in die Flugzeuge vom Boden aus.

Im Regelfall müssen also bei einer Gepäckförderanlage eines Flughafens die Gepäckstücke der Flugreisenden vom Check-In-Bereich in die Gepäckhalle transportiert werden. Die Ebene des Check-In-Bereichs liegt dabei 10 bis 20 Meter oberhalb der Gepäckhalle. Üblicherweise wird dieser Höhenunterschied mittels Schrägförderern überwunden. Die zum Transport der Gepäckstücke dienenden Schrägförderer weisen aus Gründen der sicheren Handhabung und zur Vermeidung von Störungen der einen Neigungswinkel von höchstens 18° auf. Hierdurch bedingt resultieren für das Gepäck lange Förderstrecken, die sich meist auf mehrere Schrägförderer aufteilen. Dies führt zwangsläufig zu einem sehr großen Raumbedarf zur Unterbringung der Schrägförderer. Und auch die Dauer des Gepäcktransports ist hierdurch bestimmt.

Diese Nachteile vermeidet das erfindungsgemäße Transportverfahren, gemäß welchem an Stelle der bislang eingesetzten Schrägförderer erstmals Vertikalförderer zum Einsatz kommen.

Die besonderen Vorteile der Erfindung sind demgemäß wie folgt:
· Raumeinsparung durch Wegfall von Schrägförderbändern;
· Kosteneinsparung bei der Steuerung für die Fördertechnik;
· Kombination der Verladung in Wannen und des Vertikaltransports;
· Wannenverladung direkt nach dem Check-In führt zu einer hohen Trackingrate;
· hohe Identifikationsraten auf Grund der kurzen Wegstrecken;
· geringe manuelle Nachkodierung zur Auffindung von Gepäck;
· Nutzung des Vertikalsförderers als Pufferspeicher;
· Nur kleine Mauer- und Deckendurchbrüche erforderlich;
· Hohe Auslastung durch gleichzeitigen Transport von Voll- und Leerwannen.

## Patentansprüche

1. Verfahren zum Transport von Gepäckstücken (12) in Flughafenanlagen mit einer Förderanlage, zum Beispiel mit einem horizontal und/oder schräg geführten Transportband, mittels welcher Förderanlage übergebene Gepäckstücke (12) horizontal und/oder schräg von wenigstens einer Aufgabestelle (14) zu wenigstens einer Ausgabestelle (16) transportiert werden, an welcher die Gepäckstücke (12) entnommen werden,
dadurch gekennzeichnet, daß
zwischen der wenigstens einen Aufgabestelle (14) und der wenigstens einen Ausgabestelle (16) die Gepäckstücke (12) zumindest örtlich vertikal gefördert werden und daß deren Transportweg elektronisch überwacht wird.

2. Verfahren nach Anspruch 1 dadurch gekennzeichnet, daß die zu transportierenden Gepäckstücke (12) jeweils in trogartigen Vorrichtungen (20) aufgenommen werden, welche auf Transportplattformen (18) abgestellt werden, welche in vertikaler Richtung bewegt werden.

3. Verfahren nach einem der vorherigen Ansprüche dadurch gekennzeichnet, daß die trogartigen, zur Aufnahme von Gepäckstücken (12) vorgesehenen Vorrichtungen (20) jeweils mit Datenträgern mit Kodierungen versehen werden, die maschinell erfaßt werden, daß die Kodierung den in diese Aufnahmevorrichtungen eingebrachten Gepäckstücke zugeordnet werden und daß durch elektronische Auswertung der erfaßten Kodierungen unter Einbeziehung der dieser Kodierung jeweils zugeordneten Gepäckstücke (12) deren örtlicher Aufenthaltsort ermittelt wird.

4. Verfahren nach einem der vorherigen Ansprüche dadurch gekennzeichnet, daß die Zufuhr von leeren trogartigen Vorrichtungen (20) auf eine Transportplattform (18) abhängig davon erfolgt, ob die hierfür vorgesehene Transportplattform (18) frei ist.

5. Vorrichtung zur Durchführung des Verfahrens nach einem der vorherigen Ansprüche 1 bis 4 in einer Flughafenanlage mit Betriebsebenen auf unterschiedlichem Niveau sowie mit wenigstens einer Fördereinrichtung (10) für Fluggepäck, zum Beispiel mit einem horizontal und/oder schräg geführten Transportband oder -gurt, welche Förderanlage darauf abgelegte Gepäckstücke horizontal und/oder schräg von wenigstens einer Aufgabestelle (14) zu wenigstens einer Ausgabestelle (16) transportiert zur Entnahme der Gepäckstücke (12), dadurch gekennzeichnet, daß eine vertikale Fördervorrichtung (10) für Gepäckstücke (12) vorgesehen ist, welche die Gepäckstücke (12) übernimmt und von einer ersten Betriebsebene zu einer zweiten Betriebsebene transportiert, und daß eine Überwachungseinrichtung vorgesehen ist, welche die Aufgabe, den Transport und die Ausgabe der Gepäckstücke (12) überwacht.

6. Vorrichtung nach Anspruch 5 dadurch gekennzeichnet, daß die vertikale Fördervorrichtung (10) Gepäckstücke (12) von einem Check-In-Bereich auf der ersten Betriebsebene zu einer Gepäckhalle auf der zweiten Betriebsebene transportiert, deren Niveau räumlich wenigstens 10 m unterhalb des Niveaus des Check-In-Bereiches liegt.

7. Vorrichtung nach einem der Ansprüche 5 oder 6 dadurch gekennzeichnet, daß die vertikale Fördervorrichtung (10) von wenigstens einer vertikal geführten Transportlinie mit daran angeordneten Plattformen (18) gebildet ist, welche die zu transportierenden Gepäckstücke (12) jeweils in trogartigen Vorrichtungen (20) aufnehmen.

8. Vorrichtung nach Anspruch 7 dadurch gekennzeichnet, daß die trogartigen Vorrichtungen (20) von Gondeln oder Wannen gebildet sind, welche auf den Plattformen (18) schwerkraftabhängig gehalten sind.

9. Vorrichtung nach einem der Ansprüche 7 oder 8 dadurch gekennzeichnet, daß die Gondeln oder Wannen mit einer Kodierung versehen sind, die von einem Lesegerät erfaßbar und in einer Auswerteeinheit auswertbar ist.

10. Vorrichtung nach einem der vorherigen Ansprüche 5 bis 9, dadurch gekennzeichnet, daß zumindest eine optische Einrichtung zur Überwachung des vertikalen Transportweges vorzugsweise jeweils an den Aufgabe- und Ausgabestellen, vorgesehen ist.

11. Vorrichtung nach einem der vorherigen Ansprüche 7 bis 10 dadurch gekennzeichnet, daß die Transportlinie von einer Förderkette gebildet ist, an welcher in festem Abstand die Transportplattformen zur Aufnahme der Wannen oder Gondeln angeordnet sind.

12. Vorrichtung nach einem der vorherigen Ansprüche 7 bis 10 dadurch gekennzeichnet, daß die Transportlinie von einem Förderseil gebildet ist, an welcher in festem Abstand die Transportplattformen zur Aufnahme der Wannen oder Gondeln angeordnet sind.
